(19) **Europäisches Patentamt**

**European Patent Office**

**Office européen des brevets**

(11) **EP 1 038 064 B1**

(12) **EUROPEAN PATENT SPECIFICATION**

(45) Date of publication and mention
of the grant of the patent:
**26.03.2003 Bulletin 2003/13**

(21) Application number: **98966308.3**

(22) Date of filing: **08.12.1998**

(51) Int Cl.⁷: **D07B 1/06**, D07B 1/16

(86) International application number:
**PCT/EP98/08122**

(87) International publication number:
**WO 99/031313 (24.06.1999 Gazette 1999/25)**

(54) **STEEL CORD WITH POLYMER MATERIAL**

POLYMER ENTHALTENDES STAHLSEIL

CABLE D'ACIER AVEC MATERIAU POLYMERE

(84) Designated Contracting States:
**BE DE FR GB IT**

(30) Priority: **15.12.1997 EP 97203940**

(43) Date of publication of application:
**27.09.2000 Bulletin 2000/39**

(73) Proprietor: **N.V. BEKAERT S.A.**
**8550 Zwevegem (BE)**

(72) Inventors:
• **LIPPENS, Yvan**
**B-8570 Anzegem (BE)**

• **MEERSSCHAUT, Dirk**
**B-8710 Wielsbeke (BE)**
• **POETHKE, Horst**
**B-8520 Kuurne (BE)**

(74) Representative: **Messely, Marc**
**N.V. Bekaert S.A.,**
**I.P.D.-4011,**
**Bekaertstraat 2**
**8550 Zwevegem (BE)**

(56) References cited:
**BE-A- 900 175        US-A- 5 279 695**

**Description**

**Field of the invention**

The present invention relates to a method of avoiding filament migration in a steel cord for the reinforcing a ply of a rubber tire. The invention also relates to a steel cord with improved resistance against filament migration. The invention is mainly focused on a carcass ply of a radial tire, but the invention is also applicable to the belt ply, the chafer ply or the flipper ply of a radial tire.

**Background of the invention**

Steel cords adapted for the reinforcement of radial tires are widely known in the art. Amongst these steel cords, steel cords with a compact configuration have known a lot of commercial success. Within this context, the terms 'compact configuration' refer to steel cords having at least one layer and where this layer is saturated, i.e. has no or very small spaces between adjacent filaments of the same layer. The reasons for that success are that steel cords with a compact configuration provide a high amount of steel per unit of cross-sectional surface and that steel cords with a compact configuration may be manufactured in an economical way, e.g. in one single twisting step. Steel cords with a compact configuration, however, suffer from filament migration, e.g. migration of core filaments or of a core filament. Filament migration is the phenomenon that one or more filaments shift lengthwise with respect to their neighbors, and emerge at one end of the cord, puncturing through the rubber and damaging the tire. The cause of filament migration has been explained as a lack of anchorage of the respective filaments in the steel cord. The lack of anchorage of core filament(s) surrounded by a saturated layer of layer filaments is considered to be due to the lack of contact between the layer filaments and the core filament(s). Indeed, due to small deviations from the standard filament diameter and/or due to the fact that filaments occupy more place in a layer than originally calculated (in fact they are more ellipses than true circles as a consequence of the twisting step and consequently occupy more space than circles), strong contacts are present between the filaments of a saturated layer at the cost of contact with the core filaments.

Prior art document US-A-4 783 955 has tried to solve this problem of filament migration by increasing the diameter of problem filaments where migration is likely to occur, for example, the core filaments so that contact is generated between these filaments and the surrounding filaments of the layer. This solution, however, suffers from the drawback that two different filament diameters must be used : the thicker filament(s) for the core and the thinner filaments for the layer(s). Another drawback is that, as a consequence of this diameter difference, the layer or layers are no longer saturated, i.e. there are spaces between adjacent filaments so that the cross-sectional configuration is no longer compact. Still another drawback is that anchorage of the core filaments largely depends upon the way of manufacturing the steel cord. Twisting the layer filaments relatively loosely around the core filaments does not create the expected contact pressure between core filament(s) and layer filaments and can still lead to core filament migration. Twisting the layer filaments under an increased tensile tension around the core filaments creates the expected anchorage but too high tensile tensions may lead to considerable fretting on the core filament(s).

In prior art document US-A-5,279,695 a solution has been provided to solve the aforementioned problems. This solution involves incorporating syndiotactic-1,2-polybutadiene in the interstices between the individual steel filaments of a steel cord. Due to this solution steel cords with improved fatigue resistance, improved corrosion resistance and resistance against filament migration have been obtained. Syndiotactic-1,2-polybutadiene has been chosen because of its unique combination of properties to cocure with and bond to rubber, its compatibility with typical tire rubbers, its compatibility with conventional curatives and its ability to be melted and processed like other thermoplastics. At the vulcanization stage the syndiotactic-1,2-polybutadiene melts and disperses throughout the interstices between the steel filaments in the cord. The adhesion between the syndiotactic-1,2-polybutadiene and the brass coating of the steel filaments is quoted as rather moderate or low. US-A-5,279,695 is also aimed at improving the corrosion resistance of steel cords. As a result of this, syndiotactic-1,2-polybutadiene is provided in all interstices between individual filaments of a steel cord, which considerably increases the bending stiffness of such a steel cord.

BE-A- 900 175 discloses a steel cord for rubber reinforcement. The core of the steel cord may be formed by a polymer with a high molecular weight, the weakening point of which is higher than the vulcanisation temperature.

**Summary of the invention**

It is an object of the present invention to avoid the drawbacks of the prior art.

It is another object of the present invention to provide an alternative to syndiotactic-1,2-polybutadiene which enables to obtain the same advantages or similar advantages.

It is also an object of the present invention to provide a steel cord with a decreased bending stiffness.

According to one aspect of the invention there is provided a method of avoiding filament migration in a steel cord for reinforcing a ply of a rubber tire.

The method comprises the following steps :

(a) providing one or more steel filaments with a metallic coating in order to function as core filaments of a cord ;

(b) providing three or more steel filaments with a metallic coating in order to function as layer filaments around said core filaments in said cord ;

(c) selecting a polymer material which does not melt at a temperature at which the rubber of the ply is vulcanized ;

(d) determining an amount of the selected polymer material so that the amount of selected polymer material does not exceed the volume of interstices between filaments to be coated and any filaments which are to lie adjacent said filaments to be coated in the finally twisted cord;

(e) surrounding one or more of the core filaments and / or of the layer filaments with said determined amount of polymer material ;

(f) twisting the layer filaments around the surrounded core filaments in order to obtain said cord ;

(g) embedding the obtained cord in a rubber ply under vulcanization temperature, whereby said polymer material does not melt

characterized in that said polymer material is further selected such that the polymer material obtains such a high adhesion level with the surrounded steel filaments that in a standard test less than 2 cm can be pulled off or wherein the polymer material is applied together with a primer so that at least the same high adhesion level is obtained.

In one embodiment of the invention, the core filament or core filaments are surrounded by polymer material. Preferably there is only polymer material provided in the interstices between the core filaments and the neighboring layer filaments.

In another embodiment of the invention, some or all of the layer filaments are surrounded by polymer material.

The number of core filaments can be one, two, three or four.

The number of layer filaments is always greater than the number of core filaments and can be three to nine or higher. An additional outer layer of outer layer filaments can be twisted around the layer filaments so that a two-layer configuration is obtained :

a (intermediate) layer with (intermediate) layer filaments around the core structure and an outer layer with outer layer filaments around the (intermediate) layer.

An example of a two-layer configuration is :

$$1 \times D_1 + 6 \times D_2 + 12 \times D_3$$

In a preferable embodiment of the invention all the filament diameters $D_1$, $D_2$ and $D_3$ are equal to D.

A wrapping filament may be wrapped around the steel cord or not.

The polymer material is selected amongst:

- a thermoplastic polyester based on polybutylenterephtalat or on polyethelenterephtalat ;
- a copolyester ;
- a thermoplastic polyurethane ; and
- a polyamide.

Preferably the polymer material is selected so that said polymer material adheres to the metallic coating such as brass or zinc.

In a preferable embodiment, the number of layer filaments, and as the case may be, the number of outer layer filaments, and the way of twisting is so chosen that the final cord has a compact configuration, i.e. that the average space between two neighboring layer filaments (and between two neighboring outer layer filaments) is smaller than $0.1 \times D_l$, where $D_l$ is the average diameter of all the (outer) layer filaments.

In case of a 1xD + 6xD or a 1xD + 6xD + 12x D configuration where the single core filament is surrounded by polymer material, the average thickness of the polymer layer around the single core filament is preferably smaller than $0.080 \times D$, e.g. about $0.076 \times D$. This is about the quantity of polymer just needed to fill up the voids between the core filament and the six surrounding intermediate layer filaments. Within the context of the present invention, the 'average thickness of the polymer' equals to the average thickness of the polymer layer just before the twisting of the layer around the core.

According to a second aspect of the present invention, there is provided a steel cord with improved resistance against filament migration. The steel cord comprises one or more steel core filaments functioning as core, three or more steel layer filaments functioning as layer and twisted around the core, and a plurality of steel outer layer filaments twisted around the layer. The steel cord further comprises an amount of polymer material with a melting point above the vulcanization temperature. The amount of polymer material does not exceed the volume of interstices between a selection of core filaments and layer filaments.

### Brief description of the drawings

The invention will now be described into more detail with reference to the accompanying drawings wherein

- FIGURE 1 shows a transversal cross-section of a 1+6+12-steel cord according to the invention where the core structure comprises polymer material and one filament;
- FIGURE 2 shows a detailed view of the transversal cross-section of FIGURE 1 ;
- FIGURE 3 shows a transversal cross-section of a 3+9+1-steel cord according to the invention where the core structure comprises polymer material and three filaments ;
- FIGURE 4 shows a detailed view of the transversal cross-section of FIGURE 3 ;
- FIGURE 5 shows a transversal cross-section of a 1+6+12 steel cord according to the invention where three of the six layer filaments ;
- FIGURE 6 shows a transversal cross-section of a steel core filament surrounded by a polymer material;
- FIGURE 7 helps to explain a standard test for determining the anchorage of some filaments in the steel cord.

### Description of the preferred embodiments of the invention

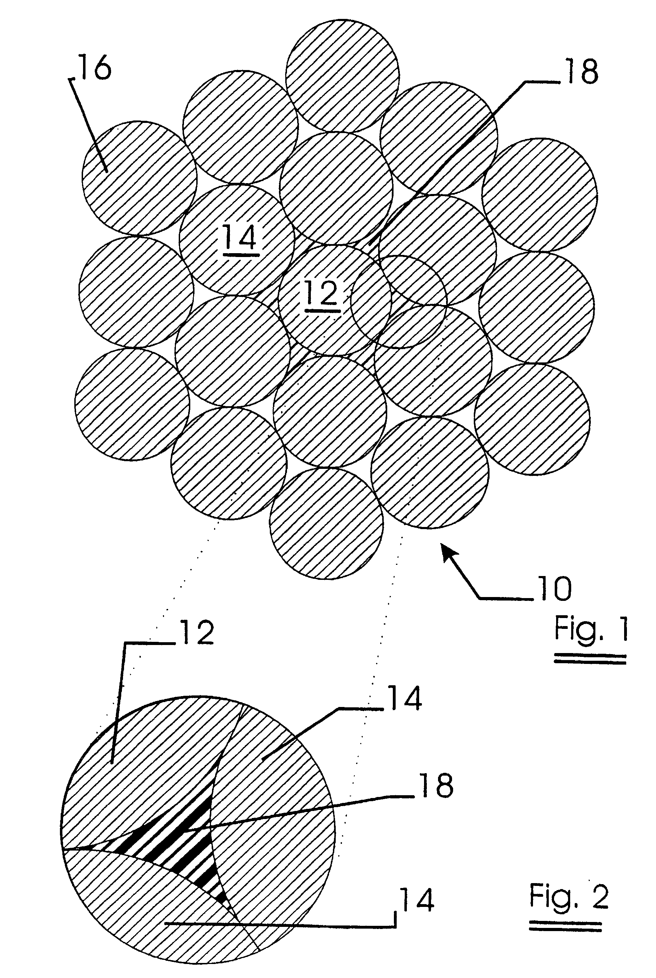

FIGURE 1 shows a transversal cross-section of a 1+6+12-steel cord 10 according to the invention. The steel cord 10 comprises a core structure with one steel core filament 12, an intermediate layer of intermediate layer filaments 14 surrounding the core structure and an outer layer of outer layer filaments 16 surrounding the intermediate layer. The core structure also comprises polymer material 18 which adheres to the core filament 12 and to the intermediate layer filaments 14.

As is shown clearly in FIGURE 2, there is just enough or almost enough polymer material 18 to fill up the voids between the core filament 12 and the intermediate layer filaments 14 so that the intermediate layer filaments still can form a saturated layer, i.e. a layer with no or very small spaces between neighboring intermediate layer filaments.

The adhesive function of the polymer material 18 ensures that core filament 12 is kept in place during repeated bendings and that core filament migration is avoided, irrespective of the contact pressures between the intermediate layer filaments 14 and the core filament 12 and irrespective of the applied tensions on the relevant filaments during twisting process. The polymer material 18 need not to and in fact does not interact with the rubber of the eventual tire ply since the melting temperature of the polymer material 18 must be higher than the vulcanization temperature.

The choice of a 1+6+12 configuration allows to use the same diameter D for all filaments 12, 14 and 16, which avoids the need to keep the respective filaments separately and which allows to obtain a saturated intermediate layer and a saturated outer layer if all filaments are twisted in the same direction and at the same twisting step.

However, within the context of the present invention, other configurations may be considered, such as e.g. a 1+7+14 steel cord.

Summarizing, a steel cord with a compact configuration and without filament migration is obtained by using filaments with all the same diameter, by twisting them in the same direction and with the same step without taking special measures with respect to the applied tensions on the filaments during twisting.

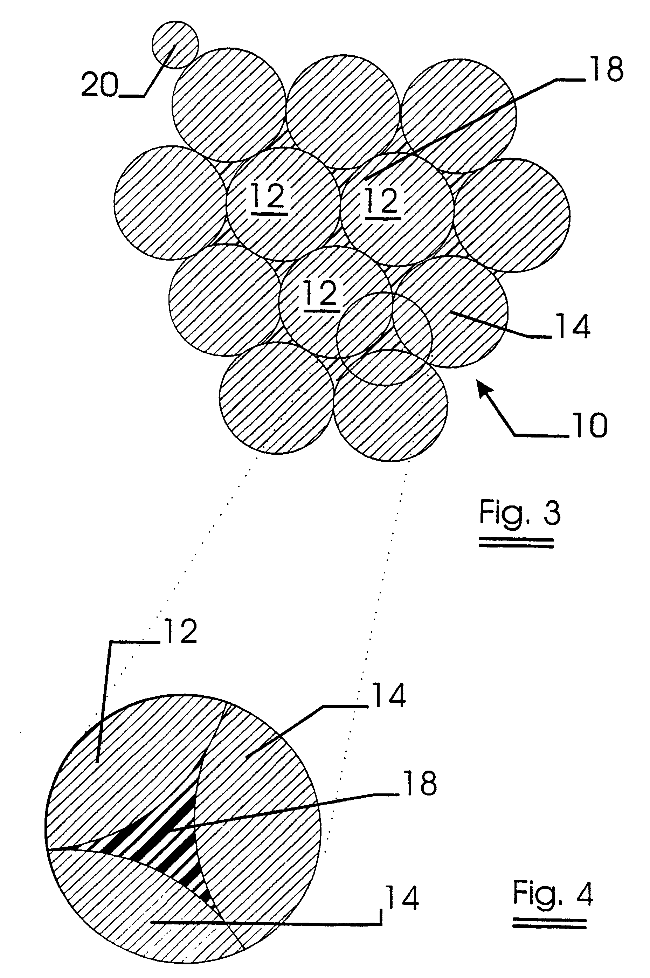

FIGURE 3 shows the transversal cross-section of yet another embodiment of a steel cord according to the invention. Here we have a 3+9+1 structure. The core structure comprises three core filaments 12 and the only layer has nine steel layer filaments 14. A wrapping filament 20 surrounds the layer. Referring to both FIGURE 3 and FIGURE 4 polymer material 18 realizes the adhesion bond between the three core filaments 12 and the nine layer filaments 14. Here again, use of the same filament diameter D for both the core filaments 12 and for the layer filaments 14 leads to a compact configuration if the amount of polymer material 18 is just enough to fill up the interstices between the core filaments 12 and the layer filaments 14.

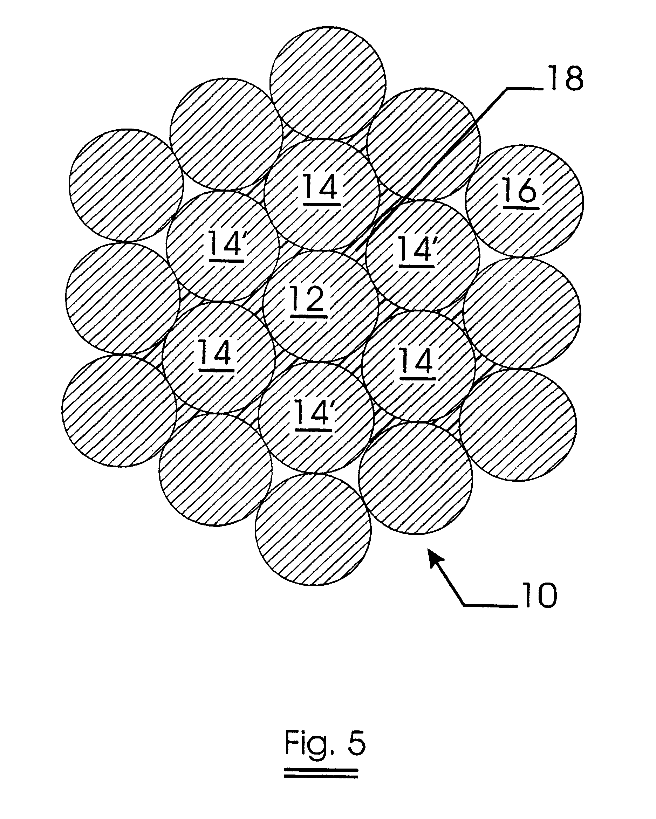

FIGURE 5 shows a transversal cross-section of another 1+6+12 steel cord according to the invention. In this embodiment only three of the six layer filaments 14 have been surrounded with a polymer material 18.

The other three layer filaments 14' have not been surrounded by polymer material 18. The surrounded filaments 14 alternate with the non-surrounded filaments 14' around the single core filament 12. The amount of polymer material 18 is such that it fills the interstices between the layer filaments 14, layer filaments 14', core filament 12 and some outer layer filaments 16.

Other alternative embodiments are also possible. For example it is possible to surround all six layer filaments 14, 14' with a polymer material 18.

In yet another alternative embodiment the core filament 12, and all the layer filaments 14, 14' are surrounded by a polymer material 18.

Summarizing, following variations are possible with a 1+6+12-construction :

1+polymer + 6 + 12

1 + 6+polymer + 12

1 + 3+polymer + 3 +12

1+polymer + 6+polymer + 12

In each embodiment the polymer material preferably does not protrude to between and through some of the twelve outer filaments 16.

A steel cord according to the invention may be manufactured by first extruding a core filament 12 with the necessary amount of polymer material 18 and by subsequently twisting the layer filaments around the extruded core filament 12. Dependent upon the type of polymer material, a primer may be required to obtain an acceptable adhesion bond between the polymer material and the steel filament. The primer can be on the basis of a solvent or on the basis of a hot melt and is applied to the filament before the extrusion process. The steps of application of the primer, extrusion and twisting are preferably done in one continuous line operation.

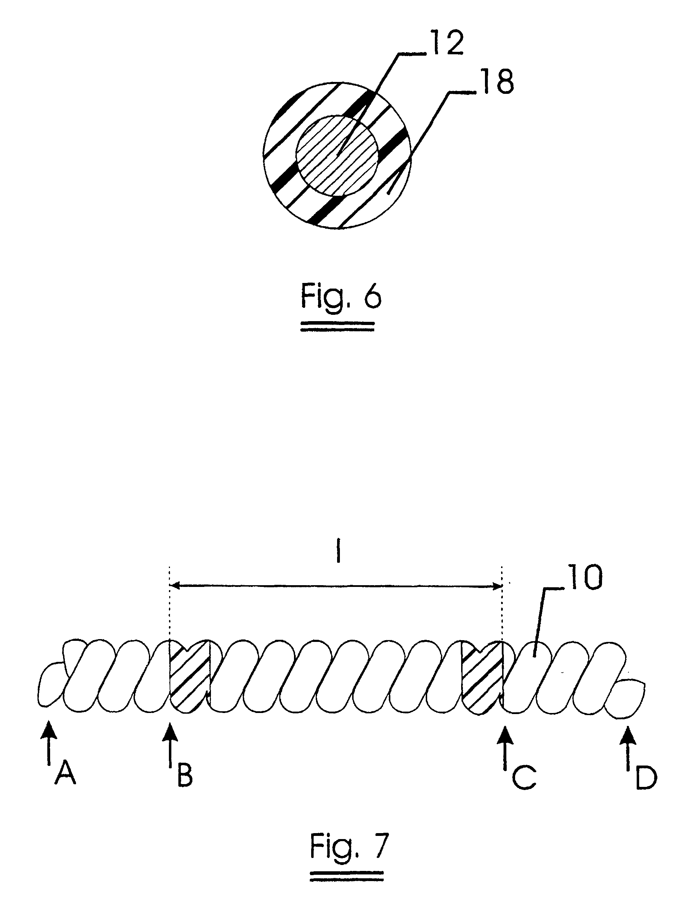

FIGURE 6 illustrates a cross-section of a core filament 12 with the extruded polymer material 18 just before the twisting step.

In case of a 1+6 or 1+6+12 compact configuration, with all filament diameters equal to D, the optimal average thickness of the polymer material is given by :

$$\Delta l \ = \ \frac{3}{2} D \left( \frac{\sqrt{3}}{\pi} \ - \ \frac{1}{2} \right) = 0.077 \times D$$

In case of a 1+6 or 1+6+12 compact configuration, with all layer filament diameters equal to D, but with a core filament diameter d smaller than D, the optimal average thickness of the polymer material is given by :

$$\Delta l \ = \ \frac{\frac{3}{2} D^2 \left( \frac{\sqrt{3}}{\pi} \ - \ \frac{1}{2} \right) \ + \ \frac{1}{4} \left( D^2 \ - \ d^2 \right)}{d}$$

In the more general configuration of a 1xd + nxD + mxD, with n ≥ 3, the optimal average thickness of the polymer for the case d ≥ D, is given by :

$$\Delta l \ = \ \frac{1}{4} \left[ \frac{n}{\pi} D \sqrt{2 \frac{D}{d} \ + \ 1} \ - \ d \ - \ \frac{D^2}{2d} \left( n - 2 \right) \right]$$

and the optimal average thickness of the polymer for the case d < D is given by

$$\Delta l = \frac{1}{4}\left[\frac{n}{\pi}\ D\ \sqrt{2\ \frac{D}{d}\ +\ 1}\ -\ d\ -\ \frac{D^2}{2d}\ (n-2)\ +\ d\left(\frac{D^2}{d^2}\ -\ 1\right)\right]$$

wherein

$$D = d\ [\ \sin\ \beta\ (\sin\ \beta\ +\ 1)]/1\ -\ \sin^2\ \beta]$$

with $\beta = \pi/n$ and $n \geq 3$

Within the context of the present invention a polymer material is said to adhere to a surrounded steel filament when the steel filament coated with the polymer material obtains a rating of 0 to 3, preferably 0 to 2, according to the following standard test. This standard test to evaluate the adhesion or bond between the synthetic coating and the tensile member is carried out as follows.

A length of a steel filament coated with polymer material is taken. The polymer material is removed in the longitudinal direction over about five cm length on both sides of the filament, diametrically towards each other by means of the sharp side of a cutting knife. By means of the blunt side of the cutting knife the polymer material is slightly lifted. Finally, the polymer material is tried with the fingers to be pulled off the steel filament.

An evaluation is made according to following observations :

| Rating | Description |
|---|---|
| **0** more than excellent | Nothing can be removed from the filament, the lifted polymer material breaks right away when pulling. |
| **1** excellent | No further polymer material can be pulled off with the fingers but very small parts can be removed by means of a knife. |
| **2** good | Small strips of less than 1 cm can be pulled off with great difficulty or by pulling very carefully. |
| **3** less good | Strips of about 2 cm can be pulled off with some difficulty or by pulling carefully. |
| **4** bad | Strips of 2 cm can be pulled off very easily. |
| **5** bad | The polymer film is hanging loose after having removed the coating on both sides. |

Comparison Tests

A steel cord as used in the present invention has been compared with two other prior art steel cord constructions.

Prior art construction ① is a 0.20 + 6x0.175 + 12x0.175 compact cord, twisted in Z-direction with step 10 mm and with all filaments with a brass coating.

Prior art construction ② is a 0.20 + 6x0.175 + 12x0.175 compact cord, twisted in Z-direction with step 10 mm, with a zinc coated core filament and with brassed intermediate and outer layer filaments.

The invention cord is [0.15 + polymer] + 6x0.175 + 12 x0.175. The twist direction is Z and the twist step is also 10 mm.

Table 1 hereunder mentions the obtained results from a fatigue test and from a core pull out test.

Table 1 :

| | Pull out force (N) | fatigue resistance (nr of cycles before fracture) | remarks |
|---|---|---|---|
| prior art ① | 9 | 121 000 ± 15 300 | only core filament pulled out |
| | 6 | | |

Table 1 :   (continued)

|  | Pull out force (N) | fatigue resistance (nr of cycles before fracture) | remarks |
|---|---|---|---|
| prior art ② | 11 | 110 000 ± 22 000 | only core filament pulled out |
|  | 17 |  |  |
|  | 13 |  |  |
|  | 16 |  |  |
| invention | 37 | 134 400 ± 20 500 | 1+6 is pulled out |
|  | 42 |  |  |
|  | 32 |  |  |

The pull out force is greater for an invention cord than for the prior art cords. This means that the anchorage of the core structure in an invention cord is greater than the anchorage of the core structure in the tested prior art cords.

In the test, for the prior art cords, only the core filament is pulled out of the cord whereas for the invention cord the core filament and the intermediate layer is pulled out of the cord. This means that due to the polymer material, the core filament adheres better to the surrounding intermediate layer filaments than the intermediate layer filaments adhere to the surrounding outer layer filaments. This is remarkable having regard to the much smaller surface available between the core filament and the intermediate layer filaments.

The pull out force is defined as the force expressed in Newton required to remove longitudinally the core filament(s) over a length equal to a predetermined number of times the lay length of the cord out of the layer filaments or layer strands.

With reference to FIGURE 7, the test for determining this pull out force is carried out as follows. A predetermined sample length AD of a steel cord 10 greater than $l$ ($l$ = a number of times the lay length of the cord) is cut at both sides A and D and the length $l$ = BC is marked in the middle of the sample length, e.g. by means of a plastic tape.

Steel cord 10 is disassembled over AB and all layer filaments or (layer strands) are cut away in B without damaging the core filament or core filaments. Steel cord 10 is again disassembled over CD, but now the core filament(s) is (are) cut away in point C. The disassembled layer filaments or layer strands are assembled again and welded together at point D.

Cord end CD is fixed in a fixed clamp of a tensile tester and cord end AB is fixed in a moving clamp of the tensile tester.

The tensile test is stopped when the recorded force drops considerably below the maximum recorded force or after a predetermined time. The maximum recorded force is the core pull out force.

Table 1 also reflects that the fatigue resistance of the tested invention cord is comparable to or slightly better than that of the tested prior art cords.

The fatigue resistance of the cords has been determined in the cords embedded in rubber. Rubber embedded steel cords of a definite length are gripped at both ends, bent over a test pulley of a specified radius, and cycled under a specified preload over a certain stroke until break.

Prior art constructions ① and ② and the cord which is used in the method according to the invention have also be subjected to an endless belt test. An endless belt test has been fully disclosed in Luc Bourgois, Belt Test for the Evaluation of the Fretting Fatigue and Adhesion Behavior of Steel Cord in Rubber, Tire Reinforcement and Tire Performance, ASTM STP 694, 1979, pp 103-109.

To that end prior art construction ①, prior art construction ② and the cord according to the invention are embedded in three distinct rubber belts each with a density of 18 ends per decimeter (EPDM). The three belts then undergo $10^8$ cycles under an axial tension of 400 MPa over two pulleys with a diameter of 143 mm. The tables hereunder mention the obtained results.

Table 2 :

| **Breaking load of the cords :** | | | |
|---|---|---|---|
|  | breaking load $F_m$ (N) | | |
|  | as such | after endless belt test | loss (%) |
| prior art ① | 1395±17 | 1332±50 | 4.5 |

Table 2 :   (continued)

| Breaking load of the cords : | | | |
|---|---|---|---|
| | breaking load $F_m$ (N) | | |
| | as such | after endless belt test | loss (%) |
| prior art ② | 1419±1 | 1344±36 | 5.3 |
| Invention | 1393±4 | 1401±14 | -0.6 ⇒ 0 |

The fatigue resistance of the individual filaments is then determined according to the test conditions mentioned in Table 3 hereunder.

Table 3 :

| Test conditions : | | | |
|---|---|---|---|
| Filament diameter (mm) | roll diameter (mm) | axial loading (gram) | speed |
| 0.15 | 3.5 | 980 | 130 cycles/min |
| 0.175 | 4.0 | 980 | 1 cycle = |
| 0.20 | 4.5 | 1280 | 2 bendings |

Table 4 :

| Fatigue resistance of the individual filaments : | | | |
|---|---|---|---|
| | number of cycles before fracture | | |
| | as such | after endless belt test | loss (%) |
| prior art ① | | | |
| core | 302±47 | 187±88 | 38 |
| outer layer | 355±37 | 306±50 | 14 |
| prior art ② | | | |
| core | 303±18 | 300±18 | 1.0 |
| outer layer | 363±37 | 343±34 | 5.5 |
| Invention | | | |
| core | 419±39 | 382±55 | 9.0 |
| outer layer | 352±35 | 318±38 | 10.0 |

A visual analysis of the prior art constructions ①  and ②  and of the cord used in the method of the invention had led to following results with respect to fretting behavior.

Table 5 :

| Visual analysis of fretting behavior: | | |
|---|---|---|
| | code | |
| | outside of cord | inside of cord |
| prior art ① | 1 | 2-3 |

Table 5 : (continued)

| Visual analysis of fretting behavior: | | |
|---|---|---|
| | code | |
| | outside of cord | inside of cord |
| prior art ② | 1-2 | 2 |
| invention | 1 | 1 |

The code numbers in Table 5 have following meaning :

code 0 : no fretting
code 1 : very little to slight fretting
code 2 : moderate fretting
code 3 : pronounced fretting
code 4 : heavy fretting.

During the $10^8$ cycles of the endless belt test prior art constructions ① and ② showed core filament migration after $4.10^7$ cycli whereas the cord used in the method according to the invention did not show core filament migration after the full $10^8$ cycli.

Steel cords adapted for the reinforcement of rubber radial tires, more particularly for the reinforcement of carcass plies of radial tires, have following features. The diameter of the individual steel filaments or steel wires range from 0.04 mm to about 0.40 mm, particularly from 0.04 mm to 0.25 mm.

The steel composition is along following lines : a carbon content between 0.70 % and 1.10 %, a manganese content between 0.40 % and 0.70 %, a silicon content between 0.10 % and 0.40 %, a maximum sulphur content of 0.03 %, a maximum phosphorus content of 0.03 %. Micro-alloying with particular elements such as chromium, nickel, vanadium, boron, cobalt, copper, molybdenum etc. is not excluded for amounts ranging from 0.01 % to 0.50 %.

The steel structure is preferably pearlite, but martensite is not excluded. The steel filaments are conveniently coated with a metallic layer such as brass (63.5 - 67.5 % Cu + 36.5 - 32.5 % Zn) zinc, or a zinc alloy (example : Zn + 2 à 12 % Al + Mischmetal) in order to facilitate the final drawing steps and/or to provide an adhesion with the elastomer or to provide a corrosion resistance.

The tensile strength of the steel wires or steel filaments ranges from 2200 MPa (1 MPa = 1 Newton/mm$^2$) to 4000 MPa and more and is mainly dependent upon the final diameter, the exact composition (amount of carbon + amount of micro-alloying components) and on the amount of final drawing.

**Claims**

1.   A method of avoiding filament migration in a steel cord (10) for reinforcing a ply of a rubber tire said method comprising the following steps :

(a) providing one or more steel filaments (12) with a metallic coating in order to function as core filaments (12) of a cord (10);
(b) providing three or more steel filaments (14) with a metallic coating in order to function as layer filaments (14) around said core filaments (12) in said cord (10);
(c) selecting a polymer material (18) which does not melt at a temperature at which the rubber of the ply is vulcanized;
(d) determining an amount of the selected polymer material (18);
(e) surrounding one or more of the core filaments (12) and / or of the layer filaments (14) with said determined amount of polymer material (18);
(f) twisting the layer filaments (14) around the surrounded core filaments (12) in order to obtain said cord (10);
(g) embedding the obtained cord (10) in a rubber ply under vulcanization temperature, whereby said polymer material (18) does not melt,

**characterized in that** said polymer material (18) is further selected such that said polymer material (18) obtains such a high adhesion level with the surrounded steel filaments (12) that in a standard test less than 2 cm can be pulled off or wherein said polymer material (18) is applied together with a primer so that at least the same high adhesion level is obtained.

2. A method according to claim 1 wherein said amount of the selected polymer material (18) is determined so that it does not exceed the volume of interstices between filaments (12) to be coated and any filaments (14) which are to lie adjacent said filaments to be coated in the finally twisted cord (10).

3. A method according to claim 1 or claim 2 wherein one or more of the core filaments (12) are surrounded with said determined amount of polymer material (18).

4. A method according to claim 1 or claim 2 wherein one or more of the layer filaments (14) are surrounded with said determined amount of polymer material (18).

5. A method according to any one of the preceding claims wherein said polymer material (18) is selected amongst a thermoplastic polyester based on polybutylenterephtalat or on polyethylenterephtalat, a copolyester, a thermoplastic polyurethane and a polyamide.

6. A method according to any one of the preceding claims wherein said polymer material (18) is selected so that said polymer material adheres to said metallic coating.

7. A method according to any one of the preceding claims where said method comprises the step of selecting the number of layer filaments (14) such that they have an average space of 0.1 x $D_l$ between each other in the final cord (10), where all layer filaments (14) have the same diameter $D_l$.

8. A method according to any one of the preceding claims wherein said method comprises the steps of :

- providing a number of steel filaments (16) in order to function as outer layer filaments (16) around said layer filaments (14);
- twisting said outer layer filaments (16) around the layer filaments (14) before bringing the cord (10) in said rubber ply.

9. A method according to any one of the preceding claims wherein said method comprises the steps of :

- providing a filament (20) in order to function as a wrapping filament (20);
- wrapping said wrapping filament (20) around the cord (10) before bringing the cord (10) in said rubber ply.

10. A method according to any one of the preceding claims wherein all core filaments (12), all layer filaments (14) and all outer layer filaments (16) are selected as to have a substantial same diameter D.

11. A method according to claim 10 wherein

- one core filament (12) is provided ;
- six layer filaments (14) are provided ;
- twelve outer layer filaments (16) are provided.

12. A method according to claim 11 wherein the amount of selected polymer material (18) is determined that it has an average thickness of less than 0.080 x D.

13. A method according to any one of the preceding claims wherein all filaments (12,14,16) of the core and the layer or layers are twisted in the same sense and at the same pitch.

**Patentansprüche**

1. Ein Verfahren, um die Verschiebung von Fasern in einem Stahlcordseil (10) zu vermeiden, das zur Verstärkung einer Cordgewebeeinlage in einem Gummireifen dient, wobei das besagte Verfahren die folgenden Schritte umfasst:

(a) Bereitstellung von einer oder mehreren Stahlfasern (12) mit einem metallischen Überzug, damit diese als Kernfasern (12) eines Cordseils (10) dienen;

(b) Bereitstellung von drei oder mehr Stahlfasern (14) mit einem metallischen Überzug, damit diese als Schichtfasern (14) um die besagten Kernfasern (12) herum in dem besagten Cordseil (10) dienen;

(c) Auswahl eines Polymermaterials (18), welches bei einer Temperatur, bei der der Gummi der Cordgewebeeinlage vulkanisiert wird, nicht schmilzt;

(d) Ermittlung einer Menge des ausgewählten Polymermaterials (18);

(e) Einschließung von einer oder mehreren der Kernfasern (12) und / oder der Schichtfasern (14) mit der ermittelten Menge an Polymermaterial (18);

(f) Verdrallung der Schichtfasern (14) um die eingeschlossenen Kernfasern (12) herum, um das besagte Cordseil (10) zu erhalten;

(g) Einbetten des erhaltenen Cordseils (10) bei der Vulkanisierungstemperatur in eine aus Gummi bestehende Cordgewebeeinlage, wobei das besagte Polymermaterial (18) nicht schmilzt,

**dadurch gekennzeichnet, dass** das besagte Polymermaterial (18) weiterhin so ausgewählt wird, dass das besagte Polymermaterial (18) einen hohen Adhäsionsgrad mit den eingeschlossenen Stahlfasern (12) erhält, so dass bei einer standardmäßigen Prüfung weniger als 2 cm abgerissen werden können, oder wobei das besagte Polymermaterial (18) zusammen mit einer Grundierung aufgetragen wird, so dass wenigstens der gleiche, hohe Adhäsionsgrad erreicht wird.

2. Ein Verfahren nach Anspruch 1, worin die besagte Menge des ausgewählten Polymermaterials (18) so ermittelt wird, dass sie das Volumen der kleinen Lücken zwischen den Fasern (12), die mit einem Überzug versehen werden sollen, und allen Fasern (14), die neben den besagten, zu beschichtenden Fasern liegen, in dem endgültig verdrallten Cordseil (10) nicht überschreiten.

3. Ein Verfahren nach Anspruch 1 oder Anspruch 2, worin eine oder mehrere der Kernfasern (12) mit der besagten, ermittelten Menge an Polymermaterial (18) eingeschlossen werden.

4. Ein Verfahren nach Anspruch 1 oder Anspruch 2, worin eine oder mehrere der Schichtfasern (14) mit der besagten, ermittelten Menge an Polymermaterial (18) eingeschlossen werden.

5. Ein Verfahren nach einem der vorherigen Ansprüche, worin das besagte Polymermaterial (18) aus einem thermoplastischen Polyester auf der Basis von Polybutylenterephtalat oder auf der Basis von Polyethylenterephtalat, einem Kopolyester, einem thermoplastischen Polyurethan und einem Polyamid ausgewählt wird.

6. Ein Verfahren nach einem der vorherigen Ansprüche, worin das besagte Polymermaterial (18) so ausgewählt wird, dass das besagte Polymermaterial auf dem metallischen Überzug haftet.

7. Ein Verfahren nach einem der vorherigen Ansprüche, worin das besagte Verfahren den Schritt der Auswahl der Anzahl von Schichtfasern (14) umfasst, so dass diese einen durchschnittlichen Zwischenraum von 0,1 x $D_I$ zwischen einander in dem endgültigen Cordseil (10) haben, wobei alle Schichtfasern (14) den gleichen Durchmesser $D_I$ haben.

8. Ein Verfahren nach einem der vorherigen Ansprüche, worin das besagte Verfahren die folgenden Schritte umfasst:

- Bereitstellung einer Anzahl von Stahlfasern (16), die als äußere Schichtfasern (16) um die besagten Schichtfasern (14) herum dienen;
- Verdrallung der äußeren Schichtfasern (16) um die Schichtfasern (14) herum, bevor das besagte Cordseil (10) in die besagte, aus Gummi bestehende Cordgewebeeinlage eingebracht wird.

9. Ein Verfahren nach einem der vorherigen Ansprüche, worin das besagte Verfahren die folgenden Schritte umfasst:

- Bereitstellung einer Faser (20), die als eine umhüllende Faser (20) dient;
- Wickeln der besagten umhüllenden Faser (20) um das Cordseil (10) herum, bevor das Cordseil (10) in die besagte, aus Gummi bestehende Cordgewebeeinlage eingebracht wird.

10. Ein Verfahren nach einem der vorherigen Ansprüche, worin alle Kernfasern (12), alle Schichtfasern (14) und alle äußeren Schichtfasern (16) so ausgewählt werden, dass sie im Wesentlichen einen gleichen Durchmesser D haben.

**11.** Ein Verfahren nach Anspruch 10, worin:

- eine Kernfaser (12) bereitgestellt wird;
- sechs Schichtfasern (14) bereitgestellt werden;
- zwölf äußere Schichtfasern (16) bereitgestellt werden.

**12.** Ein Verfahren nach Anspruch 11, worin die Menge des ausgewählten Polymermaterials (18) so festgelegt wird, dass sie eine durchschnittliche Dicke von weniger als 0,080 x D hat.

**13.** Ein Verfahren nach einem der vorherigen Ansprüche, worin alle Fasern (12, 14, 16) des Kerns und der Schicht bzw. der Schichten in der gleichen Richtung und mit der gleichen Steigung verdrallt werden.

**Revendications**

**1.** Procédé pour éviter la migration de filaments dans un câble d'acier (10) pour renforcer un pli d'un pneu de caoutchouc,
ledit procédé comprenant les étapes suivantes :

(a) on met en oeuvre un ou plusieurs filaments d'acier (12) avec un revêtement métallique pour opérer en filaments d'âme (12) d'un câble (10);
(b) on met en oeuvre trois filaments d'acier (14) ou plus avec un revêtement métallique pour opérer en filaments de couche (14) autour desdits filaments d'âme (12) dans ledit câble (10);
(c) on sélectionne un matériau polymère (18) qui ne fond pas à la température à laquelle le caoutchouc du pli est vulcanisé;
(d) on détermine une quantité du matériau polymère choisi (18);
(e) on entoure un ou plusieurs des filaments d'âme (12) et/ou des filaments de couche (14) avec ladite quantité déterminée de matériau polymère (18);
(f) on retord les filaments de couche (14) autour des filaments d'âme entourés (12) pour obtenir ledit câble (10);
(g) on noie le câble obtenu (10) dans un pli de caoutchouc à la température de vulcanisation, de sorte que ledit matériau polymère (18) ne fonde pas;

**caractérisé en ce que** ledit matériau polymère (18) est en outre choisi de sorte que ledit matériau polymère (18) obtienne un niveau d'adhérence si élevé avec les filaments d'acier entourés (12) que, lors d'un test standard, il y ait moins de 2 cm qui puissent être arrachés ou dans lequel ledit matériau polymère (18) est appliqué conjointement avec une couche d'accrochage de sorte qu'au moins le même niveau élevé d'adhérence soit obtenu.

**2.** Procédé selon la revendication 1, dans lequel ladite quantité du matériau polymère choisi (18) est déterminée de sorte qu'elle ne dépasse pas le volume d'interstices entre les filaments (12) à revêtir et des filaments quelconques (14) qui doivent être adjacents auxdits filaments à revêtir dans le câble finalement retordu (10).

**3.** Procédé selon la revendication 1 ou la revendication 2, dans lequel un ou plusieurs des filaments d'âme (12) sont entourés de ladite quantité déterminée de matériau polymère (18).

**4.** Procédé selon la revendication 1 ou la revendication 2, dans lequel un ou plusieurs des filaments de couche (14) est ou sont entourés de ladite quantité déterminée de matériau polymère (18).

**5.** Procédé selon l'une quelconque des revendications précédentes, dans lequel ledit matériau polymère (18) est choisi parmi un polyester thermoplastique à base de poly(téréphtalate de butylène) ou de poly(téréphtalate d'éthylène), un copolyester, un polyuréthane thermoplastique et un polyamide.

**6.** Procédé selon l'une quelconque des revendications précédentes, dans lequel ledit matériau polymère (18) est choisi de sorte que ledit matériau polymère adhère audit revêtement métallique.

**7.** Procédé selon l'une quelconque des revendications précédentes, dans lequel ledit procédé comprend l'étape de sélection du nombre de filaments de couche (14) de sorte qu'ils aient un espace moyen de séparation mutuelle de 0,1 x $D_1$ dans le câble final (10), tous les filaments de couche (14) ayant le même diamètre $D_1$.

**8.** Procédé selon l'une quelconque des revendications précédentes, dans lequel ledit procédé comprend les étapes suivantes :

- on met en oeuvre un certain nombre de filaments d'acier (16) pour opérer en filaments de couche extérieurs (16) autour desdits filaments de couche (14);
- on retord lesdits filaments de couche extérieurs (16) autour des filaments de couche (14) avant d'acheminer le câble (10) dans ledit pli de caoutchouc.

**9.** Procédé selon l'une quelconque des revendications précédentes, dans lequel ledit procédé comprend les étapes suivantes :

- on met en oeuvre un filament (20) pour qu'il opère en filament d'enveloppe (20);
- on applique ledit filament d'enveloppe (20) autour du câble (10) avant d'acheminer le câble (10) dans ledit pli de caoutchouc.

**10.** Procédé selon l'une quelconque des revendications précédentes, dans lequel tous les filaments d'âme (12), tous les filaments de couche (14) et tous les filaments de couche extérieurs (16) sont choisis de manière à avoir un diamètre D sensiblement identique.

**11.** Procédé selon la revendication 10, dans lequel :

- on met en oeuvre un seul filament d'âme (12);
- on met en oeuvre six filaments de couche (14); et
- on met en oeuvre douze filaments de couche extérieurs (16).

**12.** Procédé selon la revendication 11, dans lequel la quantité de matériau polymère choisi (18) est déterminée de manière à avoir une épaisseur moyenne inférieure à 0,080 x D.

**13.** Procédé selon l'une quelconque des revendications précédentes, dans lequel tous les filaments (12,14,16) de l'âme et de la ou des couches sont retordus dans le même sens et selon le même pas.

16

18

14

12

18

10

Fig. 1

12

14

18

14

Fig. 2

20

18

12    12

12

14

10

Fig. 3

12

14

18

14

Fig. 4

Fig. 5

Fig. 6

Fig. 7